# FASCICULE DE BREVET EUROPEEN

(11) **EP 3 575 181 B1**
(45) Date de publication et mention de la délivrance du brevet: **15.06.2022**
(21) Numéro de dépôt: 19176798.7
(22) Date de dépôt: 27.05.2019
(51) Int. Cl.: B62B 5/02

(54) **DISPOSITIF D'AIDE AU FRANCHISSEMENT D'OBSTACLES POUR ÉLEVER OU ABAISSER MANUELLEMENT UNE CHARGE, ET CHARGE COMPRENANT UN TEL DISPOSITIF**
HILFSVORRICHTUNG ZUR ÜBERWINDUNG VON HINDERNISSEN ZUM MANUELLEN ANHEBEN ODER ABSENKEN EINER LAST, UND MIT EINER SOLCHEN VORRICHTUNG AUSGESTATTETE LAST
DEVICE TO ASSIST OBSTACLE CLEARANCE FOR MANUALLY RAISING OR LOWERING A LOAD, AND LOAD COMPRISING SUCH A DEVICE

(30) Priorité: 29.05.2018 FR 1854556
(43) Date de publication de la demande: 04.12.2019
(73) Titulaire: Mazzolini, Arturo, 56400 Auray (FR); Desriac, Sylvie, 56400 Auray (FR); Mazzolini, Camille, 56400 Auray (FR); Mazzolini, Justine, 14200 Herouville-Saint-Clair (FR); Mazzolini, Lisa, 35000 Rennes (FR)
(72) Inventeur: Mazzolini, Arturo, 56400 Auray (FR); Desriac, Sylvie, 56400 Auray (FR); Mazzolini, Camille, 56400 Auray (FR); Mazzolini, Justine, 14200 Herouville-Saint-Clair (FR); Mazzolini, Lisa, 35000 Rennes (FR)
(74) Mandataire: Casalonga

(56) Documents cités:
- WO-A1-2014/005192
- DE-U1-202009 000 172
- US-A- 1 679 885
- US-A- 4 344 643
- US-A- 5 581 843
- US-A1- 2008 150 245
- US-A1- 2011 227 304

## Description

La présente invention concerne le domaine des dispositifs d'aide pour élever ou abaisser manuellement une charge, telle qu'un chariot, une valise ou tout autre moyen analogue afin de franchir un dénivelé sans déséquilibrer et sans abîmer le moyen de transport de la charge.

En effet, sans un tel dispositif d'aide, il est difficile, sans devoir fournir des efforts importants, de pouvoir franchir un obstacle, et ce sans abîmer le moyen de transport qui porte la charge.

Plus particulièrement, la présente invention concerne de tels dispositifs d'aide intégrés dans une valise ou plus généralement dans un système de transport d'une charge.

Il est courant de rencontrer des difficultés lors de franchissement d'obstacles avec un chariot ou une valise dès lors que le poids devient significatif pour la personne qui le manie, notamment lors de la montée ou de la descente d'obstacles présentant des dénivelés importants, tels que par exemple des caniveaux, des seuils, notamment de portes ou des marches d'escaliers.

Les valises comprennent généralement une poignée télescopique et au moins deux roues afin de faciliter le déplacement de la valise. Grace aux roues, souvent de petites tailles, de petits obstacles peuvent être franchis avec la seule force physique de l'utilisateur pour soulever l'intégralité de la charge.

Toutefois, en cas de franchissement d'un obstacle plus important ou répétitif, tel que des marches d'escalier, et avec une charge dépassant les capacités physiques de l'utilisateur, les roues deviennent insuffisantes pour faciliter la montée ou la descente et il y a un risque de déséquilibre de la personne par la charge mise en mouvement.

En effet, en cas de descente d'un obstacle, tel que des marches, la charge, sous l'action de son poids, tombe sur la marche immédiatement inférieure (appelée marche descendante), ce qui provoque l'endommagement des roues, voire de la charge, une nuisance sonore et même dans certains cas, un déséquilibre de la personne qui tient la charge ou le chariot pouvant entraîner la chute de celle-ci ou la perte de contrôle de l'objet.

En cas de montée d'un obstacle, tel qu'un seuil ou une marche, si le poids de la charge est supérieur aux capacités physiques de l'utilisateur ou de sa capacité à rester en équilibre, l'utilisateur sera empêché pour franchir le dénivelé ou risquera d'être déséquilibré. De plus, il peut y avoir un frottement de la charge contre l'obstacle, générant une accélération de la dégradation du moyen de transport de ladite charge.

Il existe des mécanismes comprenant trois roues tournant en orbite autour d'un axe. Toutefois, un tel mécanisme est limité. En effet, s'il facilite le franchissement de petits dénivelés en montant, il n'en facilite pas la descente. De plus, un tel mécanisme augmente considérablement l'encombrement extérieur et n'est pas compatible avec le critère de « bagage cabine » établi par les compagnies aériennes.

Il existe donc un besoin pour améliorer le franchissement d'obstacles en facilitant l'élévation et l'abaissement manuel d'une charge, et notamment une valise, afin de pouvoir franchir l'obstacle en sécurité, en minimisant l'effort physique, en répondant en tous points aux critères de « bagage-cabine » et ce, sans dégradation du moyen de transport de la charge.

Le but de la présente invention est de fournir un dispositif capable de répondre en tout points au besoin énoncé ci-dessus

La présente invention a pour objet un ensemble comprenant un dispositif d'aide au franchissement d'obstacles et un moyen de transport d'une charge. Un tel ensemble est connu du document DE202009000172U1.

Le dispositif d'aide comprend au moins un bras articulé automatiquement autour d'une articulation solidaire du moyen de transport de la charge entre une première position rétractée sous le poids de la charge et une deuxième position déployée sous l'action d'un élément élastique et amortisseur configuré pour se rétracter sous l'effet du poids de la charge, et qui soit en mesure d'amortir les chocs, de stocker de l'énergie potentielle et de pouvoir ramener automatiquement le bras dans la deuxième position déployée sous l'action de l'élément élastique lorsque la charge est au moins en partie soulevée par l'utilisateur pour franchir un obstacle.

Le dispositif d'aide comprend en outre un système configuré pour éviter le frottement et la dégradation du moyen de transport de la charge contre l'obstacle à franchir

Ainsi, le dispositif d'aide permet de monter et descendre des dénivelés, même importants, en minimisant le bruit, les chocs et les frottements induits par l'action de la gravité sur le moyen de transport de la charge.

Un tel dispositif d'aide permet également de soulager l'utilisateur du poids de la charge lors de franchissement d'obstacles importants, en minimisant tout déséquilibre que la charge pourrait avoir sur l'utilisateur.

Avantageusement, le dispositif comprend au moins une roue principale solidaire en rotation du bras du côté opposé à l'articulation.

Le diamètre de la roue principale est, par exemple, supérieur à la hauteur du bras.

Avantageusement, le système configuré pour éviter le frottement et la dégradation du moyen de transport de la charge contre l'obstacle à franchir comprend au moins une roue secondaire solidaire en rotation de l'extrémité libre du bras ou tout autre moyen de limitation de friction, tel que, par exemple, des billes serties.

Les roues secondaires ont, par exemple, un diamètre plus petit que la roue principale.

Selon un mode de réalisation, le bras articulé comprend au moins une partie comportant une première extrémité solidaire en rotation par son articulation au moyen de transport de la charge et une deuxième extrémité libre, opposée à la première extrémité.

Selon un mode de réalisation, le bras articulé comprend deux parties sensiblement parallèles entre elles comportant une première extrémité solidaire en rotation par son articulation à la charge et une deuxième extrémité libre, opposée à la première extrémité.

La première extrémité de chacune des parties de bras comprend, par exemple, une articulation en rotation dans un plan vertical.

La roue principale est avantageusement solidaire en rotation du bras entre les deux parties de bras, à proximité de la deuxième extrémité libre, c'est-à-dire plus proche de la deuxième extrémité libre que de la première extrémité articulée.

Par exemple, chacune des deux parties de bras comprend à son extrémité libre, une roue secondaire ou une bille sertie.

Les roues secondaires présentent, par exemple, un diamètre plus petit que la roue principale.

Le système d'amortissement peut être réalisé par le biais d'un élément élastique solidaire de l'articulation ou de tout autre moyen capable d'emmagasiner de l'énergie comme, par exemple, un élastomère synthétique ou naturel, une barre de torsion ou un gaz compressible.

Le système d'amortissement peut comprendre un élément d'absorption des chocs en fin de course incorporé ou séparé telle qu'une butée élastomère ou contenant un gaz compressible.

Le système d'amortissement peut être éventuellement réglable depuis l'extérieur ou l'intérieur de la charge afin de s'ajuster au poids de ladite charge, par exemple à l'aide de graduations indexées sur la charge en fonction du poids à soulever et d'un effort minimum nécessaire à l'activation du dispositif d'aide.

Le dispositif d'aide comprend un mécanisme de blocage du bras dans la première position rétractée afin de rendre le dispositif d'aide inactif pour minimiser l'encombrement global et le garder compatible avec les critères de bagage cabine. Cette fonction est nécessaire afin de se conformer aux critères de « bagage cabine ».

Selon un deuxième aspect, l'invention est appliquée à une valise comprenant un manche, par exemple télescopique, se terminant par une poignée de préhension, au moins deux roues situées du même côté que le manche et un dispositif d'aide au franchissement d'obstacles tel que décrit précédemment et disposé latéralement entre les deux roues et complétement intégré dans la partie inférieure de la valise dans la première position rétractée.

Grace à l'intégration du dispositif d'aide à l'intérieur de la charge et au dispositif de blocage en position rétractée, l'encombrement extérieur de la charge n'est pas augmenté et permet de répondre aux normes des compagnies aériennes pour les valises cabine tout en minimisant le volume réservé au dispositif d'aide sur la totalité du volume intérieur du moyen de transport de la charge.

Par exemple, la valise comprend une roue arrière, du côté opposé au manche. En variante, on pourrait prévoir que la valise comporte deux roues avant et deux roues arrière. On pourrait également prévoir que la valise ne comporte pas de roues arrière, ou encore aucune roue, mais des plots de positionnement permettant d'éviter que la valise ne repose sur le sol directement par sa partie inférieure.

L'articulation du dispositif d'aide au franchissement d'obstacles est disposée de manière nullement limitative du côté opposé au manche ou dans toute autre direction qui faciliterait la fabrication ou le fonctionnement.

On notera que l'invention n'est pas limitée à l'intégration du dispositif d'aide au franchissement d'obstacles dans une valise. Il s'étend à tout moyen de transport manuel de charge.

Selon un troisième aspect, l'invention concerne un cadre de manutention de marchandises comprenant un manche de préhension, par exemple télescopique, au moins deux roues situées du même côté que le manche de préhension et un dispositif d'aide au franchissement d'obstacles tel que décrit précédemment et disposé latéralement entre les deux roues.

L'action de franchir un obstacle descendant, tel que par exemple une marche d'escalier, est réalisée comme suit.

Lors de la descente d'un obstacle, le bras du dispositif d'aide au franchissement d'obstacles est actionné automatiquement autour de l'articulation dans la position déployée dès lors que la roue du dispositif quitte la première marche sous l'action de l'élément élastique. La roue principale du dispositif d'aide vient de ce fait en contact avec la marche inférieure et le système d'amortissement intégré est à son tour activé pour permettre d'amortir la descente, avant que le contact de la marche inférieure ne se fasse avec les roues fixes du moyen de transport de la charge.

Lorsque le moyen de transport de la charge se trouve en contact sur la marche inférieure, le bras du dispositif d'aide au franchissement d'obstacles est actionné automatiquement autour de l'articulation dans la position rétractée à nouveau sous l'effet du poids de la charge.

L'action de franchir un obstacle ascendant, tel que par exemple une marche d'escalier, est réalisée comme suit.

Afin de monter un obstacle, l'utilisateur soulève la charge, juste ce qui est nécessaire pour que le dispositif d'aide commence à s'actionner et rapproche ainsi les roues du niveau de la marche supérieure. Cette fonction peut-être réglable, ce qui a pour effet de maintenir le bras constamment en contact avec la marche et donc de continuer à compenser le poids résiduel de la charge supporté par le mécanisme. Le bras du dispositif d'aide au franchissement d'obstacles est ainsi actionné automatiquement autour de l'articulation dans une deuxième position plus ou moins déployée en fonction de la charge et du réglage choisi par l'utilisateur. La roue principale du dispositif d'aide en contact avec la marche inférieure vient en appui avec le rebord ou nez de la marche supérieure sans frottement grâce aux roues secondaires ou aux billes serties pour rouler sur celle-ci dans le sens ascendant sur le nez de marche en évitant les frottements sur la charge avant d'arriver sur la marche supérieure.

Lorsque la charge se trouve sur la marche supérieure, le bras du dispositif d'aide au franchissement d'obstacles est à nouveau actionné autour de l'articulation et se trouve à nouveau dans la première position plus ou moins rétractée sous l'effet du poids de la charge et du réglage choisi.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente, en perspective, un dispositif d'aide au franchissement d'obstacles pour élever ou abaisser manuellement une charge, et notamment par exemple une valise.
- la figure 2 représente une valise comprenant le dispositif d'aide au franchissement d'obstacles selon la figure 1 ;
- les figures 3a à 3c illustrent les étapes de franchissement d'un obstacle descendant par la valise de la figure 2 ; et
- les figures 4a à 4c illustrent les étapes de franchissement d'un obstacle ascendant par la valise de la figure 2.

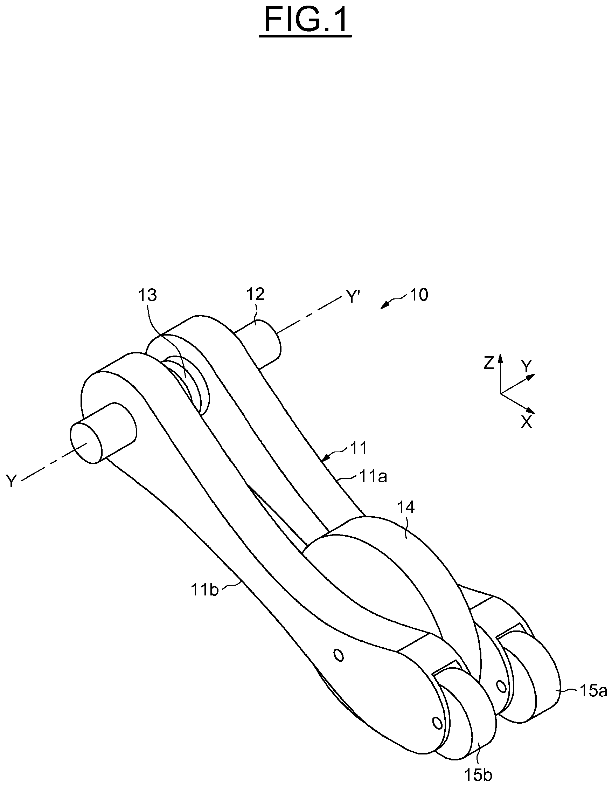

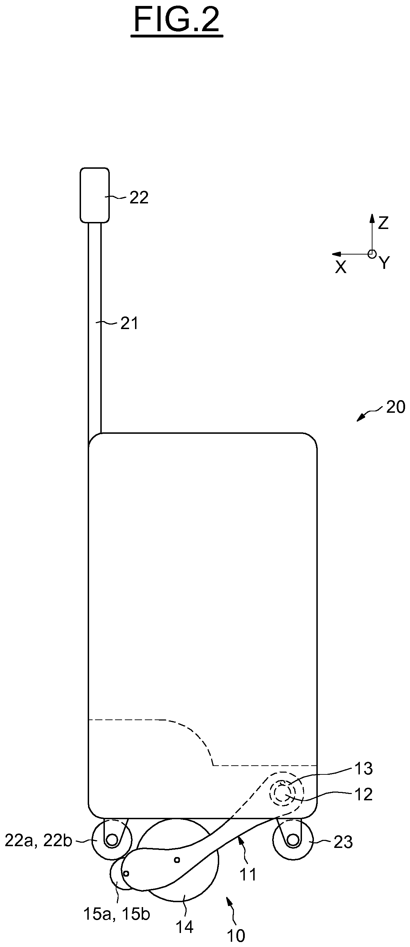

Tel qu'illustré à la figure 1, un dispositif d'aide au franchissement d'obstacles, référencé 10 dans son ensemble, permet d'élever ou d'abaisser manuellement un moyen de transport d'une charge 20, et notamment une valise visible sur la figure 2.

Le dispositif 10 d'aide au franchissement d'obstacles comprend un bras articulé 11 autour d'une articulation 12 solidaire du moyen de transport de la charge 20. Le bras articulé 11 comprend deux parties 11a, 11b sensiblement parallèles entre elles comportant une première extrémité solidaire en rotation du moyen de transport de la charge 20 et une deuxième extrémité libre, opposée à la première extrémité.

La première extrémité de chacune des parties de bras 11a, 11b comprend un logement (non référencé) recevant l'articulation 12. Le bras 11 du dispositif 10 d'aide au franchissement d'obstacles est ainsi articulé entre une position rétractée sous le poids de la charge et une position déployée dite de repos considérant des positions intermédiaires résultant du poids à soulever, et du réglage effectué par l'utilisateur.

Le dispositif 10 d'aide au franchissement d'obstacles comprend en outre un système d'amortissement 13 capable d'emmagasiner de l'énergie, tel que par exemple un ressort, un élastomère naturel ou synthétique, la torsion d'un élément mécanique ou une cavité renfermant un gaz compressible solidaire de l'articulation 12 et éventuellement d'une butée de fin de course pour l'amortissement des chocs provoqués par le franchissement des dénivelés en descente.

Grace au système d'amortissement 13, le bras 11 revient automatiquement dans sa position déployée de repos sous l'action de la charge réduite sur l'élément élastique lorsque la charge 20 est soulevée pour franchir un obstacle.

Le système d'amortissement 13 peut être réglable depuis l'extérieur ou l'intérieur de la charge afin de s'ajuster au poids de ladite charge, par exemple à l'aide de graduations.

Le dispositif 10 peut-être rendu inactif pour minimiser l'encombrement grâce à une clavette, une cale ou tout autre système de blocage en rotation actionné depuis l'intérieur ou l'extérieur du moyen de transport.

Le dispositif 10 d'aide au franchissement d'obstacles comprend une roue principale 14 solidaire en rotation entre les deux parties 11a, 11b de bras 11, à proximité de la deuxième extrémité libre, c'est-à-dire plus proche de la deuxième extrémité libre que de la première extrémité articulée.

Le diamètre de la roue principale 14 est supérieur à la hauteur du bras 11, de telle sorte que ce soit toujours la roue qui soit d'abord en contact avec le sol et non le bras.

Chacune des deux parties de bras 11a, 11b peut comprendre à son extrémité libre, une roue secondaire 15a, 15b ou des billes serties. Les roues secondaires 15a, 15b ou les billes serties forment un système pour éviter le frottement et la dégradation de la charge contre le dénivelé à franchir. Si le besoin s'en fait sentir, les roues secondaires ou les billes serties seront avantageusement fixées sur le moyen de transport lui-même.

Les roues secondaires 15a, 15b ont un diamètre plus petit que la roue principale 14 afin de ne pas interférer avec son action.

En variante, on pourrait prévoir que le dispositif 10 d'aide au franchissement d'obstacles ne comprenne pas de roues et repose directement sur son extrémité libre dans la position déployée.

Dans l'exemple illustré sur la figure 2, et à titre nullement limitatif, le dispositif 10 d'aide au franchissement d'obstacles de la figure 1 est intégré directement dans un moyen de transport d'une charge telle qu'une valise 20, notamment dans sa partie inférieure.

La valise 20 comprend un manche 21, par exemple télescopique, se terminant par une poignée de préhension 22. La valise 20 comprend également deux roues avant 22a, 22b, situées du même côté que le manche 21 et au moins une roue arrière 23, du côté opposé au manche 21. En variante, on pourrait prévoir que la valise comporte deux roues avant et deux roues arrière. On pourrait également prévoir que la valise ne comporte pas de roues arrière, ou encore aucune roue, mais des plots de positionnement permettant d'éviter que la valise ne repose sur le sol directement par sa partie inférieure grâce à l'action permanente du dispositif d'aide au franchissement d'obstacles.

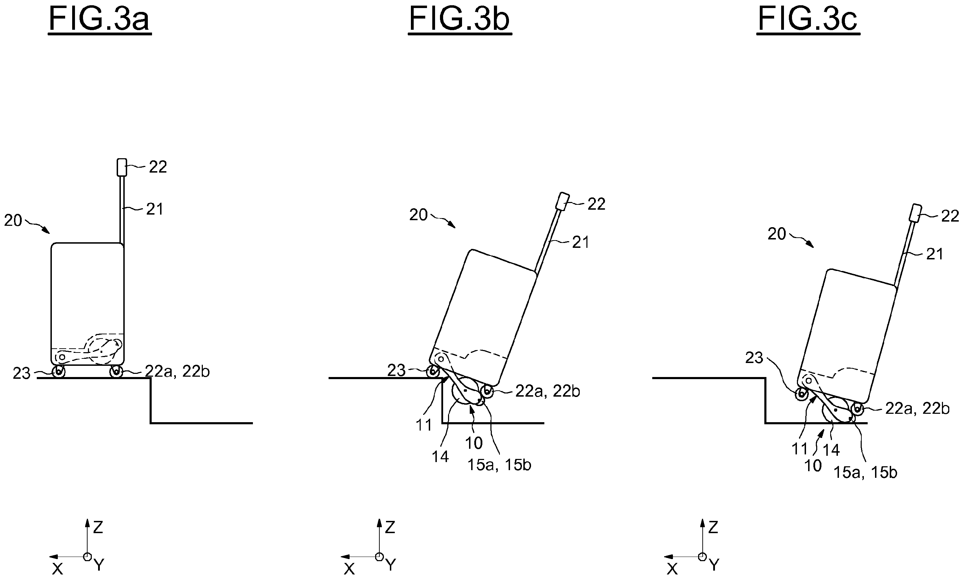

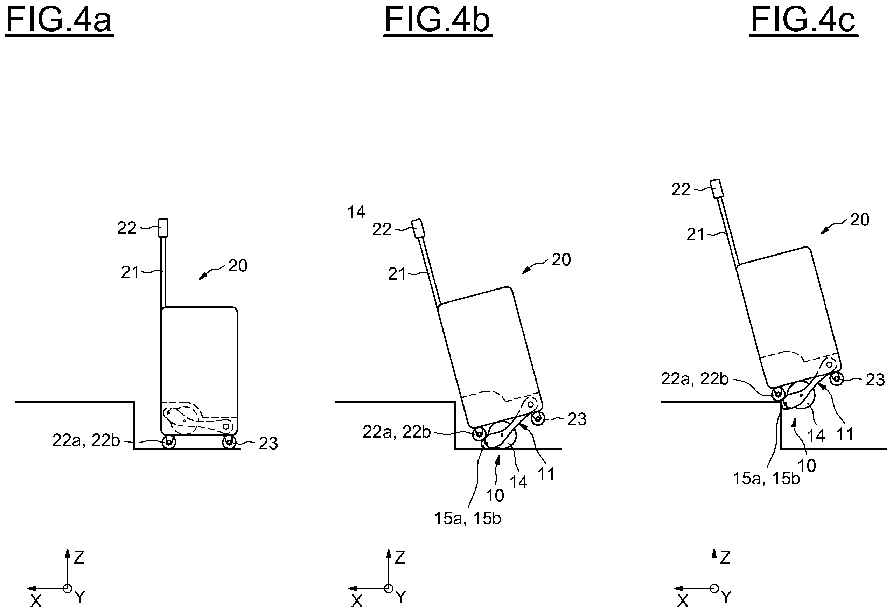

Le dispositif 10 d'aide au franchissement d'obstacles est disposé latéralement entre les deux roues avant 22a, 22b et complètement intégré dans la partie inférieure de la valise 20 en position rétractée, visible sur les figures 3a et 4a.

L'articulation 12 du dispositif 10 d'aide au franchissement d'obstacles est disposée du côté opposé au manche 21, ici du même côté que la ou les roues arrière 23.

On notera que l'invention n'est pas limitée à l'intégration du dispositif 10 d'aide au franchissement d'obstacles dans une valise ou tout autre moyen de transport de charge. En variante, on pourrait prévoir un cadre de manutention de marchandises comprenant au moins deux roues et un manche de préhension, par exemple télescopique. Le dispositif d'aide 10 est, dans ce cas, intégré au cadre de manutention, entre les deux roues situées du même côté que le manche.

On pourrait également prévoir un mécanisme de blocage du dispositif 10 d'aide au franchissement d'obstacles dans sa position rétractée grâce à une indexation comme par exemple un cliquet escamotable manuellement par l'utilisateur et accessible depuis l'intérieur ou l'extérieur du moyen de transport.

L'action de franchir un obstacle descendant, tel que par exemple une marche d'escalier, est réalisée comme suit en référence aux figures 3a à 3c.

Lors de la descente d'un obstacle, le bras 11 du dispositif 10 d'aide au franchissement d'obstacles est articulé automatiquement autour de l'articulation 12 dans la position déployée, visible sur les figures 3b et 3c. La roue principale 14 du dispositif 10 vient en contact avec la marche inférieure et le ressort 13 permet d'amortir la descente, avant le contact de la marche inférieure avec les roues avant fixes 22a, 22b de la valise 20.

Lorsque la valise 20 se trouve sur la marche inférieure, le bras 11 du dispositif 10 d'aide au franchissement d'obstacles est articulé autour de l'articulation 12 pour revenir dans la position rétractée, visible sur la figure 3a, sous l'effet du poids de la valise.

L'action de franchir un obstacle ascendant, tel que par exemple une marche d'escalier, est réalisée comme suit en référence aux figures 4a à 4c.

Afin de monter un obstacle, l'utilisateur soulève « a minima » la valise 20, ce qui pour effet que le bras 11 revient automatiquement dans sa position déployée de repos du fait d'une moindre charge réelle et ainsi de rapprocher avantageusement le moyen de transport du dénivelé supérieur. Le bras 11 du dispositif 10 d'aide au franchissement d'obstacles est ainsi actionné automatiquement autour de l'articulation 12 dans la position déployée, visible sur les figures 4b et 4c. La roue principale 14 du dispositif 10 vient en contact avec la marche inférieure (figure 4b), puis, par l'intermédiaire de ses roues secondaires 15a et/ou 15b ou les billes serties, avec le nez de la marche supérieure (figure 4c) avant d'arriver sur la marche supérieure.

Lorsque la valise 20 se trouve sur la marche supérieure, le bras 11 du dispositif 10 d'aide au franchissement d'obstacles est articulé autour de l'articulation 12 et revient dans la position rétractée, visible sur la figure 4a, sous l'effet du poids de la valise.

On pourrait également prévoir que le dispositif 10 comprenne un système de désactivation (non représenté) du dispositif. Le système de désactivation comprend, par exemple, un cliquet, une clavette ou tout autre système de blocage de l'articulation en rotation activable depuis l'intérieur ou l'extérieur du moyen de transport.

Grace à l'invention, on peut monter et descendre des dénivelés, même importants, en minimisant l'endommagement des roues et de la valise, tout en soulageant l'utilisateur du poids de la valise et en minimisant son déséquilibre.

De plus, grâce à l'intégration du dispositif à l'intérieur de la valise et du système d'inactivation du dispositif d'aide, l'encombrement extérieur de la valise n'est pas augmenté et permet de répondre aux normes des compagnies aériennes concernant les valises acceptées en cabine.

On notera que l'invention n'est pas limitée à un chariot ou une valise, mais peut être appliquée à tout autre moyen analogue, tel que par exemple un diable. Dans le cas d'un diable, le dispositif d'aide au franchissement fonctionnera de manière inversée au fonctionnement d'une valise dans la mesure où pour descendre un dénivelé, l'utilisateur pousse le diable au lieu de le tirer.

## Revendications

1. Ensemble comprenant un dispositif (10) d'aide au franchissement d'obstacles et un moyen de transport d'une charge (20), ledit dispositif (10) d'aide au franchissement d'obstacles étant capable d'élever ou d'abaisser manuellement le moyen de transport d'une charge (20), **caractérisé en ce que** le dispositif (10) d'aide au franchissement d'obstacles comprend :
- au moins un bras (11) articulé automatiquement autour d'une articulation (12) solidaire du moyen de transport de la charge (20) entre une première position rétractée sous le poids de la charge (20) dans laquelle ledit dispositif (10) est intégré dans une partie inférieure du moyen de transport de la charge (20) et une deuxième position déployée sous l'action d'un élément élastique,
- au moins une roue principale (14) solidaire en rotation du bras (11) du côté opposé à l'articulation (12),
- un système d'amortissement (13) capable d'emmagasiner de l'énergie, d'amortir les chocs et de ramener automatiquement le bras (11) dans la deuxième position déployée lorsque le moyen de transport de la charge (20) est au moins en partie soulevé par l'utilisateur pour franchir un obstacle, et
- un système (15a ; 15b) configuré pour éviter le frottement et la dégradation du moyen de transport de la charge contre l'obstacle à franchir, ledit système (15a ; 15b) comprenant au moins une roue secondaire ou une bille sertie (15a ; 15b) solidaire en rotation de l'extrémité libre du bras (11), du côté opposé à l'articulation (12).

2. Ensemble selon la revendication 1, dans lequel le bras articulé (11) comprend une ou deux parties (11a, 11b) comportant une première extrémité solidaire en rotation par son articulation (12) à la charge (20) et une deuxième extrémité libre, opposée à la première extrémité.

3. Ensemble selon la revendication 2, dans lequel la roue principale (14) est solidaire en rotation du bras (11) entre les deux parties de bras (11a, 11b), à proximité de la deuxième extrémité libre.

4. Ensemble selon la revendication 2 ou 3, dans lequel chacune des deux parties de bras (11a, 11b) comprend, à son extrémité libre, une roue secondaire ou bille sertie (15a, 15b).

5. Ensemble selon l'une quelconque des revendications précédentes, dans lequel le système d'amortissement (13) est un ressort, un élastomère naturel ou synthétique, un élément mécanique en torsion ou une cavité comprenant un gaz compressible solidaire de l'articulation (12).

6. Ensemble selon l'une quelconque des revendications précédentes, dans lequel le système d'amortissement (13) est réglable depuis l'intérieur ou l'extérieur du moyen de transport de la charge (20).

7. Ensemble selon l'une quelconque des revendications précédentes, dans lequel le moyen de transport d'une charge (20) est une valise (20) comprenant un manche (21) se terminant par une poignée de préhension (22) et au moins deux roues (22a, 22b ; 23) situées du même côté que le manche (21) et dans lequel le dispositif (10) d'aide au franchissement d'obstacles est disposé latéralement entre les deux roues (22a, 22b ; 23) et complétement intégré dans la partie inférieure de la valise (20) dans la première position rétractée.

8. Ensemble selon l'une quelconque des revendications 1 à 6, dans lequel le moyen de transport d'une charge (20) est un cadre de manutention de marchandises comprenant un manche de préhension et au moins deux roues situées du même côté que le manche de préhension et dans lequel le dispositif (10) d'aide au franchissement d'obstacles est disposé latéralement entre les deux roues et intégré audit cadre de manutention, entre les deux roues situées du même côté que le manche.

## Patentansprüche

1. Anordnung, die eine Hilfsvorrichtung (10) zur Überwindung von Hindernissen und ein Mittel zum Transportieren einer Last (20) umfasst, wobei die Hilfsvorrichtung (10) zur Überwindung von Hindernissen imstande ist, das Mittel zum Transportieren einer Last (20) manuell anzuheben oder abzusenken, **dadurch gekennzeichnet, dass** die Hilfsvorrichtung (10) zur Überwindung von Hindernissen umfasst:
- mindestens einen Arm (11), der automatisch um ein Gelenk (12) herum angelenkt ist, das mit dem Mittel zum Transportieren einer Last (20) zwischen einer ersten, unter dem Gewicht der Last (20) eingezogenen Position, in der die Vorrichtung (10) in einem unteren Teil des Mittels zum Transportieren einer Last (20) integriert ist, und einer zweiten, unter der Wirkung eines elastischen Elements entfalteten Position fest verbunden ist,
- mindestens ein Hauptrad (14), das auf der gegenüberliegenden Seite zum Gelenk (12) drehfest mit dem Arm (11) verbunden ist,
- ein Dämpfungssystem (13), das imstande ist, Energie zu speichern, Stöße abzufedern und den Arm (11) automatisch in die zweite entfaltete Position zurückzuführen, wenn das Mittel zum Transportieren einer Last (20) mindestens teilweise von dem Nutzer angehoben wird, um ein Hindernis zu überwinden, und
- ein System (15a; 15b), das konfiguriert ist, um das Reiben und Beschädigen des Mittels zum Transportieren der Last am zu überwindenden Hindernis zu vermeiden, wobei das System (15a; 15b) mindestens ein Sekundärrad oder eine eingefasste Kugel (15a; 15b) umfasst, die drehfest mit dem freien Ende des Arms (11) auf der gegenüberliegenden Seite zum Gelenk (12) verbunden ist.

2. Anordnung nach Anspruch 1, wobei der angelenkte Arm (11) einen oder zwei Teile (11a, 11b) umfasst, die ein erstes Ende beinhalten, das durch sein Gelenk (12) drehfest mit der Last (20) verbunden ist und ein zweites freies Ende gegenüber dem ersten Ende.

3. Anordnung nach Anspruch 2, wobei das Hauptrad (14) zwischen den beiden Armteilen (11a, 11b) in der Nähe des zweiten freien Endes drehfest mit dem Arm (11) verbunden ist.

4. Anordnung nach Anspruch 2 oder 3, wobei jeder der beiden Armteile (11a, 11b) an seinem freien Ende ein Sekundärrad oder eine eingefasste Kugel (15a, 15b) umfasst.

5. Anordnung nach einem der vorstehenden Ansprüche, wobei das Dämpfungssystem (13) eine Feder, ein natürliches oder synthetisches Elastomer, ein gebogenes mechanisches Element oder ein Hohlraum, der ein komprimierbares Gas umfasst, ist, das fest mit dem Gelenk (12) verbunden ist.

6. Anordnung nach einem der vorstehenden Ansprüche, wobei das Dämpfungssystem (13) von innerhalb oder außerhalb des Mittels zum Transportieren der Last (20) aus einstellbar ist.

7. Anordnung nach einem der vorstehenden Ansprüche, wobei das Mittel zum Transportieren einer Last (20) ein Koffer (20) ist, der einen Griff (21) umfasst, der in einem Handgriff (22) endet, und mindestens zwei Räder (22a, 22b; 23) die sich auf derselben Seite wir der Griff (21) befinden, und wobei die Hilfsvorrichtung (10) zur Überwindung von Hindernissen seitlich zwischen den beiden Rädern (22a, 22b; 23) angeordnet ist, und in der ersten eingezogenen Position vollständig in den unteren Teil des Koffers (20) integriert ist.

8. Anordnung nach einem der Ansprüche 1 bis 6, wobei das Mittel zum Transportieren einer Last (20) ein Handhabungsgestell für Waren ist, das einen Griff und mindestens zwei Räder umfasst, die sich auf derselben Seite wie der Griff befinden, und wobei die Hilfsvorrichtung (10) zur Überwindung von Hindernissen seitlich zwischen den beiden Rädern angeordnet ist, und zwischen den beiden Rädern, die sich auf derselben Seite wir der Stiel befinden, in das Handhabungsgestell integriert ist.

## Claims

1. Assembly comprising a device (10) to assist obstacle clearance and a means for transporting a load (20), said device (10) to assist obstacle clearance being capable of manually raising or lowering the means for transporting a load (20), **characterised in that** the device (10) to assist obstacle clearance comprises:
- at least one arm (11) automatically articulated about an articulation (12) integral with the means for transporting the load (20) between a first position retracted by the weight of the load (20) wherein said device (10) is integrated into a lower part of the means for transporting the load (20), and a second position deployed by the action of an elastic element,
- at least one main wheel (14) fixed to the arm (11) for rotation therewith on the side opposite the articulation (12),
- a damping system (13) capable of storing energy, damping shocks and automatically returning the arm (11) into the deployed second position when the means for transporting the load (20) is at least partially raised by the user to clear an obstacle, and
- a system (15a; 15b) configured to prevent rubbing and degradation to the means for transporting the load against the obstacle to be cleared, said system (15a; 15b) comprising at least one secondary wheel or a ball caster (15a; 15b) fixed to the free end of the arm (11) for rotation therewith, on the side opposite the articulation (12) .

2. Assembly according to claim 1, wherein the articulated arm (11) comprises one or two parts (11a, 11b) including a first end fixed via the articulation (12) thereof to the load (20) for rotation therewith and a free second end, opposite the first end.

3. Assembly according to claim 2, wherein the main wheel (14) is fixed to the arm (11), for rotation therewith, between the two arm parts (11a, 11b), in the vicinity of the free second end.

4. Assembly according to claim 2 or 3, wherein each of the two arm parts (11a, 11b) comprises, at the free end thereof, a secondary wheel or ball caster (15a, 15b).

5. Assembly according to any one of the preceding claims, wherein the damping system (13) is a spring, a natural or synthetic elastomer, a torsional mechanical element or a cavity comprising a compressible gas integral with the articulation (12).

6. Assembly according to any one of the preceding claims, wherein the damping system (13) can be adjusted from the inside or the outside of the means for transporting the load (20).

7. Assembly according to any one of the preceding claims, wherein the means for transporting a load (20) is a suitcase (20) comprising a handle (21) ending in a handle grip (22) and at least two wheels (22a, 22b; 23) located on the same side as the handle (21) and wherein the device (10) to assist obstacle clearance is disposed laterally between the two wheels (22a, 22b; 23) and completely integrated into the lower part of the suitcase (20) in the retracted first position.

8. Assembly according to any one of claims 1 to 6, wherein the means for transporting a load (20) is a goods-handling frame comprising a grasping handle and at least two wheels located on the same side as the grasping handle, and wherein the device (10) to assist obstacle clearance is disposed laterally between the two wheels and integrated into said handling frame, between the two wheels located on the same side as the handle.
